# FASCICULE DE BREVET EUROPEEN

(11) **EP 0 484 215 B1**
(45) Date de publication et mention de la délivrance du brevet: **22.03.1995**
(21) Numéro de dépôt: 91402860.0
(22) Date de dépôt: 25.10.1991
(51) Int. Cl.: B25B 27/30

(54) **Compresseur de ressorts**
Druckfedernspanner
Spring compressor

(30) Priorité: 31.10.1990 FR 9013522
(43) Date de publication de la demande: 06.05.1992
(73) Titulaire: MECANIQUE ENERGETIQUE, F-77620 Egreville (FR)
(72) Inventeur: Lambert, Robert, F-77620 Egreville (FR)
(74) Mandataire: Robert, Jean-Pierre

(56) Documents cités:
- EP-A- 0 299 880
- DE-C- 3 335 979
- FR-A- 2 055 745
- FR-A- 2 421 034
- US-A- 3 237 919
- SOVIET INVENTIONS ILLUSTRATED Section PQ, Week 8942, 29Novembre 1989 Derwent Publications Ltd., London, GB; Class P62, AN 89-307854/42& SU-A-1 450 994 (TEKHNOLOGCOTTON MC) 15 Janvier 1989

## Description

La présente invention concerne un compresseur de ressorts, pour ressorts d'essieux associés aux amortisseurs de véhicule automobile.

Ce type de matériel comprend en général un organe moteur du type vis-écrou possédant des moyens pour attacher à chacun des éléments (vis et écrou) une bride ou coupelle sensiblement perpendiculaire à l'axe de l'organe moteur, la partie active de chaque coupelle étant déportée par rapport à l'organe moteur et étant située en regard de l'autre.

Les brides peuvent donc être rapprochées ou éloignées l'une de l'autre le long de l'axe de l'organe moteur afin de comprimer ou détendre les spires du ressort que l'on peut intercaler entre elles.

Toutes les coupelles actuellement sur le marché présentent une partie active, c'est-à-dire celle qui coopère avec les ressorts, en forme de fer à cheval ou couronne sensiblement circulaire ouverte (pour le passage de l'amortisseur logé à l'intérieur du ressort), avec un gauchissement des branches de manière à présenter sur environ 200 250° d'angle, une surface d'appui continue hélicoïdale.

Cette surface d'appui est délimitée par un rebord extérieur sur toute sa périphérie et par un rebord intérieur au moins au voisinage de la partie de la coupelle présentant les moyens de son attache à l'organe moteur.

Le principe de ces brides ou coupelles est de contenir la spire du ressort entre ces deux rebords sur laplus grande longueur angulaire possible pour assurer la sécurité de la prise. Cependant comme les ressorts a démonter peuvent varier, en diamètre extérieur entre 120 et 240 millimètres environ et en diamètre intérieur entre 100 et 210 millimètres environ, il faut plusieurs jeux de deux coupelles pour couvrir cette gamme, en tolérant qu'une coupelle reçoive des ressorts légèrement différents. Ainsi un jeu de coupelles déterminé pourra recevoir tous les ressorts dont le diamètre intérieur est supérieur à 140 millimètres et le diamètre extérieur inférieur à 210 millimètres. Pour démonter des ressorts de diamètre extérieur plus important, il faudra utiliser le jeu de coupelles plus grandes. Pour des ressorts de diamètre intérieur plus petit c'est également l'un des autres jeux de coupelles qu'il conviendra d'utiliser.

L'inconvénient principal de ces outils réside dans la nécessité de posséder un nombre important de brides par compresseur (cinq jeux de deux brides). L'utilisateur doit donc acheter un outil cher et, pour s'en servir, doit réaliser des choix en fonction des ressorts à manipuler. Le fabricant, pour faciliter ces choix, propose des tableaux de correspondance avec des codes (notamment des couleurs) ce qui est également une complication au niveau de la vente et de l'information des acheteurs, sans pour autant supprimer les risques d'usages ou de manoeuvres maladroites pouvant entraîner des accidents.

Il a été proposé d'autres coupelles pour compresseur de ressort (voir document DE-C-3335979) dans lesquelles la piste d'appui du ressort possède une partie étroite au niveau des moyens d'attachement, laquelle partie étroite est délimitée par un rebord extérieur circulaire et un rebord intérieur circulaire mais excentré par rapport au rebord extérieur, et de longueur angulaire limitée pour pouvoir accueillir et retenir convenablement des ressorts dont le diamètre moyen est compris dans une gamme plus étendue que celle des coupelles précédentes. Cette piste est d'ailleurs inclinée faiblement pour améliorer le centrage du ressort sur la coupelle Grâce à cette disposition on peut satisfaire à toutes les opérations de montage-démontage avec un nombre plus limité de jeux de coupelles (trois jeux suffisent).

La présente invention entend encore diminuer le nombre de coupelles dont on a besoin avec un compresseur de ressort pour procéder aux opérations de montage démontage à l'établi. En effet, l'accès aux ressorts sous véhicules impose, pour au moins certains d'entre eux, des formes spécifiques de coupelles pour tenir compte des éléments de carrosserie voisins des amortisseurs.

A cet effet, l'invention a donc pour objet un compresseur de ressorts selon la revendication 1.

Cette structure de bride présente de nombreux avantages par rapport aux coupelles actuelles. Elle permet en effet d'opérer sur tous les ressorts, quel que soit leur diamètre, pourvu que ces ressorts aient un diamètre intérieur supérieur au diamètre intérieur de la bride qui est dicté par la dimension transversale de la jambe de force. La jambe de force de l'amortisseur comporte toujours une tige coulissante dans un corps dont le diamètre est toujours inférieur au diamètre intérieur du plus petit ressort. Ainsi la coupelle coopérant avec le ressort au niveau de cette tige peut être unique pour tous les ressorts. Pour la coupelle coopérant avec le ressort au niveau du corps de l'amortisseur, on a constaté qu'il suffisait de prévoir deux ou au maximum trois coupelles avec des bords de piste intérieurs de diamètres différents pour que le compresseur soit utilisable avec tous les amortisseurs présents sur le marché.

En outre, du fait de l'inclinaison de la piste (en dôme ou en coupole concave), il se produit un auto centrage du ressort au début de sa prise en charge par les brides et une retenue latérale de ce ressort qui ne peut plus se désaxer en cours de compression et donc est empêché de glisser sur les brides. Cette fonction de sécurité est renforcée par le rebord intérieur et/ou extérieur dont est équipé le bord de la coupelle.

Dans un mode préféré de réalisation, la piste est convexe et le rebord s'étend le long de son bord intérieur.

Dans un autre mode de réalisation, la piste est concave et le rebord s'étend le long de son bord extérieur.

Ces deux modes de réalisation peuvent comporter différentes variantes. On citera notamment celles dans laquelle les bords intérieur et extérieur de la piste sont des arcs de cercle plans et celle dans laquelle les bords intérieur et extérieur de la piste sont des portions d'hélice. L'une de ces variantes peut également consister en un bord circulaire plan et un bord hélicoïdal.

Dans la variante dans laquelle la face active de la piste est conique (bord circulaire), il est avantageux que la partie d'attachement de la coupelle et l'élément d'attachement correspondant de l'organe moteur forment une articulation d'axe perpendiculaire à la direction de déplacement des coupelles.

Grâce à l'invention, on peut disposer d'un jeu de coupelles pour compresseur de ressorts dans lequel la partie active de chaque coupelle du jeu ne diffère de celle d'une autre coupelle que par la dimension du diamètre de la projection dans un plan perpendiculaire à la direction de déplacement du bord intérieur de la piste et par la dimension de la largeur de l'ouverture radiale, ce pour prendre en compte les différents diamètres des corps d'amortisseur actuellement sur le marché.

D'autres caractéristiques et avantages de l'invention ressortiront de la description donnée ci-après d'exemples de réalisation.

Il sera fait référence aux dessins annexes dans lesquels :
- la figure 1 est une vue générale d'un compresseur de ressorts,
- la figure 2 illustre schématiquement par une vue de dessus une bride conforme à l'invention,
- la figure 3 est une vue extérieure de côté d'une première variante de réalisation de cette bride,
- la figure 4 est un schéma d'utilisation d'un jeu de coupelles conforme à la figure 3.
- la figure 5 est une vue en coupe selon la ligne V-V de la figure 2 d'une autre variante de réalisation de l'invention.

Un compresseur pour ressort 1 comprend, de manière connue, un organe moteur 2 (genre de vérin à vis) comportant des éléments d'attachement 3 et 4 pour recevoir les parties d'attachement 5 et 6 de compression ou décompression du ressort 1. En manoeuvrant la tête de vis 9 (ou carré de manoeuvre) on rapproche ou on éloigne les coupelles 7, 8 en comprimant ou décomprimant le ressort 1.

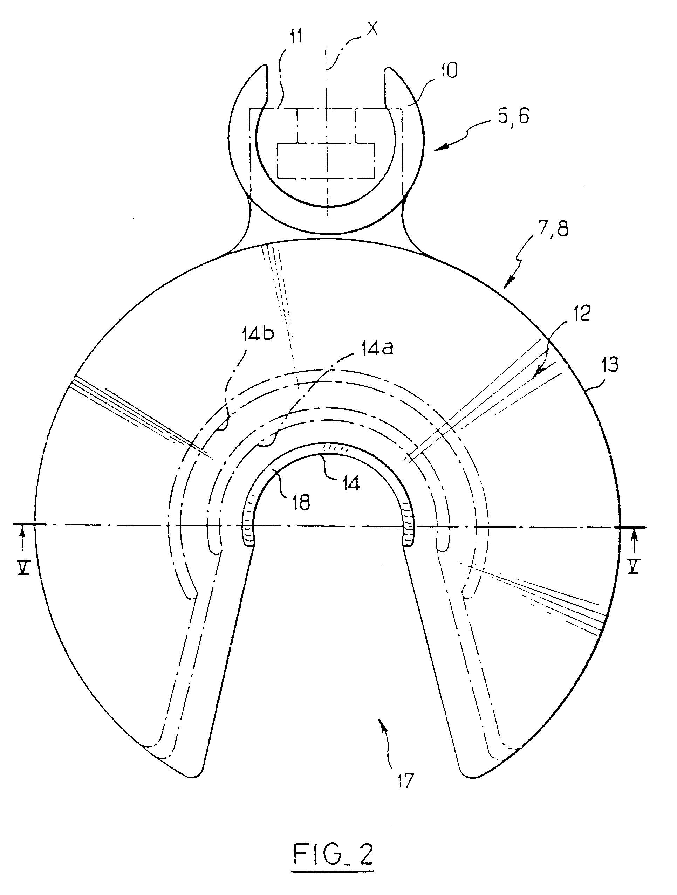

Chacune des coupelles 7 et 8, selon l'invention, est représentée vue de dessus à la figure 2. On retrouve la partie d'attachement 5, 6 de cette coupelle qui peut être de plusieurs types. Il peut s'agir d'une douille fixation 10 fendue pour sa mise en place latérale ou, comme indiqué en trait mixte 11, une sorte de logement en T dans lequel est engagée un T solidaire de l'organe moteur, une possibilité de pivotement existant alors autour d'un axe X, entre la coupelle et le vérin.

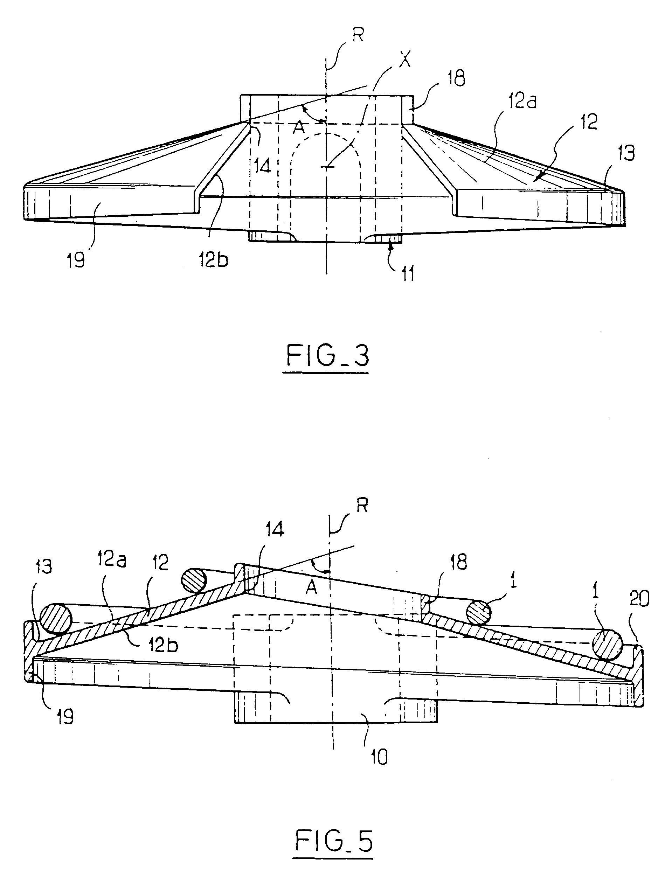

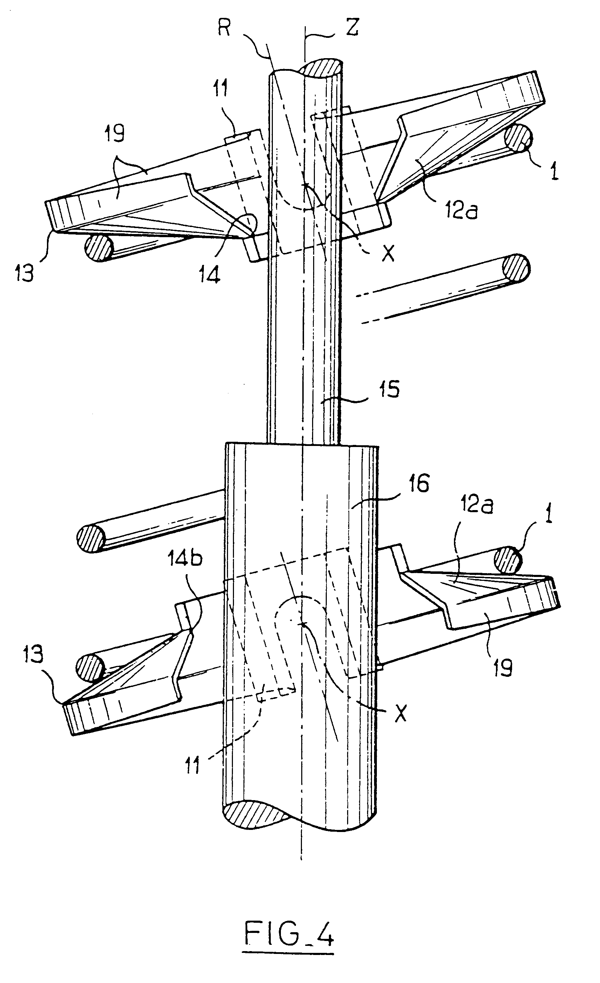

La partie active 12 de la coupelle est, sur cette figure, limitée par deux bords circulaires 13, 14, le bord extérieur 13 étant d'un diamètre au moins aussi grand que le diamètre extérieur du plus grand ressort a prendre en charge, tandis que le bord intérieur 14 est au moins égal au diamètre de l'élément d'amortisseur (tige 15 ou corps 16, voir figure 4) placé au centre du ressort 1. Cette partie active 12 est en outre échancrée par une fente radiale 17, ici légèrelemnt en V permettant le passage de l'amortisseur lors de la mise en place de l'appareil. Cette partie active, comme on le voit sur les figures 3, 4 et 5 est une paroi inclinée soit conique si les bords 13 et 14 sont circulaires plans, (figures 3 et 4), soit hélicoïdale si les bords 13 et 14 sont des arcs d'hélice (figure 5). Dans un plan radial parallèle à l'axe de déplacement des coupelles (l'axe du vérin 2), qui est le plan des figures 3 et 5, l'inclinaison A de cette paroi 12 sur l'axe R de révolution de la paroi 12 (conique ou hélicoïdale) est de préférence compris entre 70 et 80°. Cette valeur est donnée à titre indicatif et vaut surtout pour une coupelle du type de la figure 5, c'est-a-dire fermement liée au vérin 2 sans possibilité de pivotement. Pour des coupelles du type, de la figure 3, cette inclinaison peut être adaptée pour prendre en compte l'angle de pivotement de la coupelle c'est-à-dire formé entre l'axe R et la direction Z de déplacement des coupelles (figure 4).

Dans une variante non représentée, la paroi active 12 de la coupelle peut être limitée par des bords intérieur et extérieur respectivement hélicoïdal et circulaire (ou inversement), le bord circulaire pouvant être placé dans un plan incliné par rapport à l'axe R. Il est ainsi possible d'obtenir une paroi 12 qui possède une face d'appui pour le ressort dont la forme peut être adaptée à l'obtention d'un appui optimal de la spire bien que celle-ci soit déformable au cours de la compression (ou de la détente).

La paroi 12 étant inclinée et entourant l'axe R sur nettement plus de 180°, on peut dire qu'elle présente une face concave 12b et une face convexe 12a. L'une ou l'autre de ces faces 12a et 12b peuvent constituer une face d'appui pour une spire de ressort.

Dans le cas des figures 4 et 5, la face convexe 12a constitue la face d'appui du ressort. Cette face agit à la façon d'un cône pénétrant dans le ressort et de ce fait possède une fonction d'auto centrage du ressort sur la face d'appui au début de la compression et une fonction de butée s'opposant au glissement latéral de ce ressort en cours de compression ou décompression. Cette disposition permet au compresseur d'être utilisé quelles que soient les dimensions des ressorts, pourvu que le diamètre intérieur de ceux-ci soit supérieur à celui du bord intérieur 14 augmenté de l'épaisseur d'un rebord 18 dont le bord 14 est pourvu et qui fait saillie par rapport à la piste 12a. Ce rebord constitue une butée de sécurité contre un très improbable glissement du ressort sur la piste d'appui.

Le diamètre du bord 14 est dicté par les dimensions de l'amortisseur 15, 16. En général, la tige 15 de l'amortisseur est toujours de diamètre très inférieur au plus petit des ressorts mis en oeuvre.

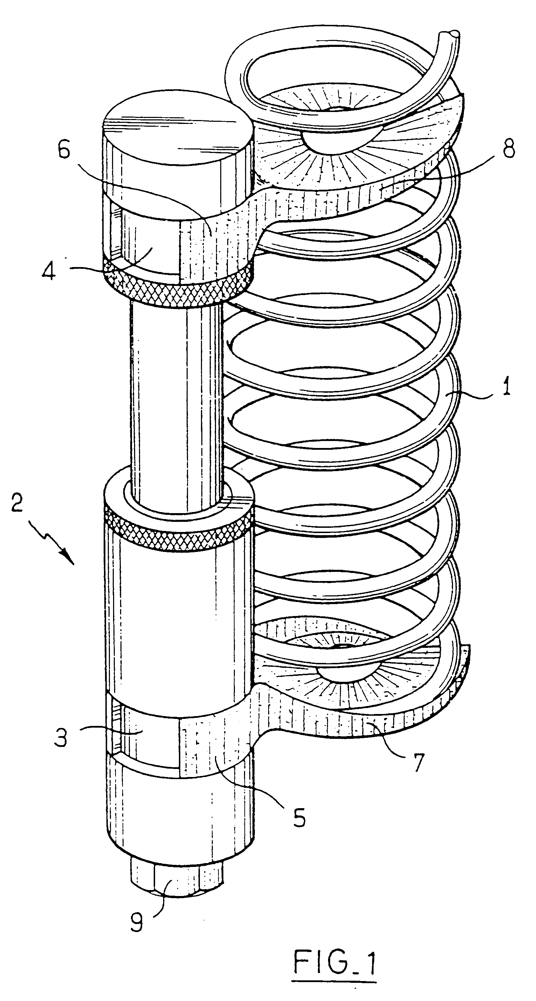

Il est donc possible de réaliser une coupelle (par exemple celle 8 de la figure 1) dont le bord intérieur 14 est de diamètre suffisamment petit pour s'adapter à tous les amortisseurs présents sur le marché (en particulier lors de leur démontage à l'établi).

Il suffit alors de prévoir quelques coupelles avec un bord 14a, 14b, de diamètre plus important pour prendre en compte les différences de dimensions présentées par les corps 16 d'amortisseurs.

Ainsi l'équipement d'un compresseur peut être complet avec trois ou quatre coupelles qui ne diffèrent que par le diamètre de leur bord intérieur et la largeur de la fente radiale 17. Il en résulte une simplification notable de cet outillage et un coût diminué.

Les coupelles à piste convexe 12a selon l'invention telles que représentées sur les figures possèdent un rebord extérieur 19, en dessous de la piste, qui constitue une nervure de raidissement de la paroi 12. Elles peuvent également comporter un rebord extérieur 20, s'étendant le long du bord extérieur 13, qui forme également butée au glissement intempestif d'un ressort. L'ensemble des rebords 18 et 20 qu'une coupelle peut comporter, donne une impression de sécurité à l'utilisateur qui sait qu'ainsi les ressorts qui glissent s'ils sont de petit diamètre seront arrêtés par leur périphérie intérieure et de grand diamètre, par leur périphérie extérieure.

La surface 12b, concave, peut également servir de piste d'appui pour une spire de ressort, avec des fonctions semblables d'auto centrage et d'arrêt contre le glissement latéral. Le rebord de raidissage 19 servirait également de rebord d'arrêt latéral de l'extérieur des ressorts. Il peut également être prévu un rebord intérieur.

L'invention permet une simplification considérable des accessoires de compresseurs de ressorts et une simplification aussi importante de l'outillage de fabrication de ces accessoires.

## Revendications

1. Compresseur de ressort pour ressort (1) de suspension de véhicule automobile disposé autour d'un élément (15, 16) amortisseur central comportant un organe moteur (2) pour déplacer linéairement l'un par rapport à l'autre, deux éléments (3, 4) d'attachement pour deux coupelles latérales (7, 8) sensiblement perpendiculaires à la direction de déplacement (Z), chaque coupelle (7, 8) comportant une partie d'attachement (5, 6) pour coopérer avec l'élément d'attachement (3, 4) correspondant de l'organe moteur (2) et une partie active pourvue d'une piste d'appui (12a, 12b) du ressort (1) déportée latéralement par rapport à la partie d'attachement (5, 6) dont la trace dans des plans axiaux est inclinée d'un angle A, interrompue par une ouverture radiale (17) pour le passage de l'élément central (15, 16), et dont au moins l'un des bords intérieur (14) et extérieur (13) est pourvu d'un rebord (18, 19, 20) en saillie par rapport à la piste (12a, 12b), caractérisée en ce que, vue de dessus la piste (12a, 12b) d'appui est en forme de portion de couronne annulaire dont le bord extérieur (13) est circulaire et dont le bord intérieur (14) est circulaire concentrique au bord extérieur (13), et en ce que l'angle A) formé entre la trace de la piste (12a, 12b) dans des plans axiaux et l'axe de révolution (R) de la piste est au plus égal à 80°.

2. Compresseur selon la revendication 1, caractérisé en ce que la piste (12a) est convexe et en ce que le rebord (18) s'étend le long de son bord intérieur (14);

3. Compresseur selon la revendication 1, caractérisé en ce que la piste (12b) est concave et en ce que le rebord (19) s'étend le long de son bord extérieur (13).

4. Compresseur selon l'une des revendications 1 à 3, caractérisé en ce que les bords intérieur (14) et extérieur (13) de la piste sont des arcs de cercle plans.

5. Compresseur selon l'une des revendications 1 à 3 caractérisé en ce que les bords intérieur (14) et extérieur (13) de la piste sont des portions d'hélice.

6. Compresseur selon la revendication 4, caractérisé en ce que la partie (11) d'attachement de la coupelle (7, 8) et l'élément d'attachement correspondant (3, 4) de l'organe (2) moteur forment une articulation d'axe (X) perpendiculaire à la direction (Z) de déplacement des coupelles.

7. Compresseur selon l'une quelconque des revendications précédentes caractérisé en ce que l'autre bord (13, 14) de la piste est pourvu d'un rebord en saillie par rapport à la piste (20).

8. Compresseur de ressort selon l'une quelconque des revendications 1 à 7, caractérisé en ce que chaque coupelle est différente d'une autre coupelle par la dimension du diamètre du bord intérieur (14) de la piste (12a, 12b) et par la dimension de la largeur de l'ouverture radiale (17).

## Claims

1. A spring compressor for a motor vehicle suspension spring (1) which is disposed around a central damper element (15, 16), comprising a drive member (2) for linear displacement relative to each other of two attachment elements (3, 4) for two lateral cups (7, 8) which are substantially perpendicular to the direction of displacement (Z), each cup (7, 8) comprising an attachment portion (5, 6) for co-operating with the corresponding attachment element (3, 4) of the drive member (2) and an active portion provided with a support track (12a, 12b) for the spring (1), which is offset laterally with respect to the attachment portion (5, 6) and the line of which in axial planes is inclined at an angle A and which is interrupted by a radial opening (17) for the central element (15, 16) to pass therethrough and of which at least one of the inner and outer edges (14, 13 respectively) is provided with a rim (18, 19, 20) in projecting relationship relative to the track (12a, 12b), characterised in that, seen from above, the support track (12a, 12b) is in the form of a portion of an annular ring whose outer edge (13) is circular and whose inner edge (14) is circular and concentric to the outer edge (13), and that the angle (A) formed between the line of the track (12a, 12b) in axial planes and the axis of revolution (R) of the track is at most equal to 80°.

2. A compressor according to claim 1 characterised in that the track (12a) is convex and that the rim (18) extends along its inner edge (14).

3. A compressor according to claim 1 characterized in that the track (12b) is concave and that the rim (19) extends along its outer edge (13).

4. A compressor according to one of claims 1 to 3 characterised in that the inner and outer edges (14 and 13 respectively) of the track are flat circular arcs.

5. A compressor according to one of claims 1 to 3 characterised in that the inner and outer edges (14 and 13 respectively) of the track are helix portions.

6. A compressor according to claim 4 characterised in that the attachment portion (11) of the cup (7, 8) and the corresponding attachment element (3, 4) of the drive member (2) form a pivotal connection with its axis (X) perpendicular to the direction (Z) of displacement of the cups.

7. A compressor according to any one of the preceding claims characterized in that the other edge (13, 14) of the track is provided with a rim in projecting relationship with respect to the track (20).

8. A spring compressor according to any one of claims 1 to 7 characterised in that each cup is different from another cup by the dimension of the diameter of the inner edge (14) of the track (12a, 12b) and by the dimension of the width of the radial opening (17).

## Patentansprüche

1. Federkompressor für die um ein zentrales Dämpfungselement (15,16) herum angeordnete Feder (1) von Radaufhängungen für Kraftfahrzeuge, mit einem Antriebsorgan (2) zur linearen relativen Bewegung zweier Befeztigungzelemente (3,4) für zwei seitliche Federteller (7,8), die im wesentlichen senkrecht zur Bewegungsrichtung (Z) angeordnet sind, wobei jeder Teller (7,8) einen mit dem entsprechenden Befestigungselement (3,4) des Antriebsorgans (2) zusammenwirkenden Befestigungsabschnitt (5,6) und einen mit einer relativ zu dem Befestigungsabschnitt (5,6) seitlich versetzten Stützfläche (12a,12b) für die Feder (1) versehenen aktiven Abschnitt hat, dessen Konturlinie in den axialen Ebenen in einem Winkel A geneigt verläuft und der durch eine radiale Öffnung (17) für den Durchtritt des zentralen Elements (15,16) unterbrochen ist und zumindest an einem seiner Ränder (innerer Rand (14), äußerer Rand (13)) mit einem in bezug auf die Stützfläche (12a,12b) abstehenden Steg versehen ist, dadurch gekennzeichnet, daß die Stützfläche (12a,12b) von oben betrachtet die Form eines Ringkranzes mit einem kreisrunden äußeren Rand (13) und einem dazu konzentrischen kreisrunden inneren Rand (14) hat und daß der zwischen der Konturlinie der Stützfläche (12a,12b) in den axialen Ebenen und der Drehachse (R) der Stützfläche gebildete Winkel (A) höchstens 80° beträgt.

2. Kompressor nach Anspruch 1, dadurch gekennzeichnet, daß die Stützfläche (12a) konvex ist und daß sich der Steg (18) entlang ihres inneren Randes (14) erstreckt.

3. Kompressor nach Anspruch 1, dadurch gekennzeichnet, daß die Stützfläche (12b) konkav ist und daß sich der Steg (19) entlang ihres äußeren Randes (13) erstreckt.

4. Kompressor nach einem der Ansprüche 1 bis 3, dadurch gekennzeichnet, daß der innere Rand (14) und der äußere Rand (13) der Stützfläche ebene Kreisbogen sind.

5. Kompressor nach einem der Ansprüche 1 bis 3, dadurch gekennzeichnet, daß der innere Rand (14) und der äußere Rand (13) der Stützfläche Abschnitte einer Schraubenlinie sind.

6. Kompressor nach Anspruch 4, dadurch gekennzeichnet, daß der Befestigungsabschnitt (11) des Tellers (7,8) und das entsprechende Befestigungselement (3,4) des Antriebsorgans (2) ein zur Bewegungsrichtung (Z) der Teller senkrechtes Achsgelenk (X) bilden.

7. Kompressor nach einem der vorhergehenden Ansprüche, dadurch gekennzeichnet, daß der andere Rand (13,14) der Stützfläche mit einem in bezug auf die Stützfläche abstehenden Steg (20) versehen ist.

8. Kompressor nach einem der Ansprüche 1 bis 7, dadurch gekennzeichnet, daß sich jeder Teller durch die Durchmessergröße des inneren Randes (14) der Stützfläche (12a,12b) und durch die Größe der Breite der radialen Öffnung (17) von einem anderen Teller unterscheidet.
